# EUROPÄISCHE PATENTSCHRIFT

(11) **EP 0 958 457 B1**
(45) Veröffentlichungstag und Bekanntmachung des Hinweises auf die Patenterteilung: **31.10.2001**
(21) Anmeldenummer: 98909312.5
(22) Anmeldetag: 01.02.1998
(51) Int. Cl.: F16C 11/06

(54) **KUGELGELENK**
BALL JOINT
JOINT A ROTULE

(30) Priorität: 04.02.1997 DE 29701902 U
(43) Veröffentlichungstag der Anmeldung: 24.11.1999
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9800286
(87) Internationale Veröffentlichungsnummer: WO9834036

(56) Entgegenhaltungen:
- DE-A- 1 425 001
- DE-A- 1 469 973
- DE-C- 4 321 595
- JP-A- 1 126 416
- US-A- 3 458 223
- US-A- 3 507 527
- US-A- 3 582 166
- US-A- 4 054 337

## Beschreibung

Die vorliegende Erfindung betrifft ein Kugelgelenk gemäß dem Oberbegriff des Anspruchs 1.

Ein derartiges Kugelgelenk ist aus der DE 14 25 001 A1 bekannt. Das bei dieser Ausführung verwendete Gewebe ist relativ dicht, wird jedoch von einer hinterspritzten Unterlags- oder Stützmasse durchdrungen, so daß auch dieses als Lagermaterial an der Kugel des Kugelgelenks anliegt. Der größte Flächenanteil der Lagerfläche wird jedoch durch das Gewebe gebildet. Die hauptsächliche Lagerbelastung wird daher von dem Gewebe aufgenommen. Das Kugelgelenk ist daher für starke Belastungen nicht geeignet.

Aus der DE 43 21 595 C2 ist ein Kugelgelenk bekannt, bei dem die Gleitfläche ganz von einem Gewebe aus Fasern geringer Reibung gebildet wird. Das Gleitgewebe ist dabei von einer Lagerschale aus Kunststoff umgeben und wird als vorgefertigte Einheit zusammen mit dieser in die Aussparung des Kugelgelenkgehäuses eingebracht. Bei Druckbelastung des Lagers wird das Gewebe relativ stark zusammengedrückt. Das Kugelgelenk ist daher für starke Belastungen ebenfalls nicht geeignet.

Mit der vorliegenden Erfindung soll die Aufgabe gelöst werden, ein Kugelgelenk der genannten Art so weiterzubilden, daß das Kugegelenk eine hohe Druckbelastung aushält, ohne in Druckrichtung nachzugeben, um zu vermeiden, daß ein unzulässiges Spiel entsteht.

Gelöst wird diese Aufgabe durch die Merkmale des Anspruchs 1.

Die Erfindung weist den besonderen Vorteil auf, daß die Kugel zusammen mit dem übergezogenen Netz in die Aussparung des Kugelgelenkgehäuses eingesetzt und in diesem hinterspritzt werden kann. Das Netz dient dabei zur Zentrierung der Kugel. Weiterhin gelangt durch die Ausbildung des bekannten Gewebes als Netz wesentlich mehr Lagermaterial an die Kugeloberfläche, so daß die Hauptbelastung durch das Lagermaterial aufgenommen wird. Infolge der erfindungsgemäßen Verbindung der Fäden an ihren Kreuzungspunkten kommt es beim Einspritzen des Lagermaterials nicht zu Fadenverschiebungen oder es kommt lediglich zu nicht störenden Veränderungen der Netzform, wobei jedoch die Netzmaschen im wesentlichen erhalten bleiben. Durch die besondere Netzgestaltung aus Außen- und Innenfäden kann sich außerdem das Lagermaterial beim Einspritzvorgang sehr schnell und gut verteilen

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: ein Kugelgelenk gemäß der Erfindung von der Seite gesehen im Schnitt,
- Fig. 2: eine Ansicht gemäß dem Schnitt I-I der Fig. 1 und
- Fig. 3: ein Kugelgelenk anderer Ausführung von der Seite gesehen im Schnitt.

Mit 1 ist ein Kugelgelenk gemäß der Erfindung bezeichnet. Es besitzt ein Kugelgelenkgehäuse 2 mit einer Aussparung 3, in die eine Kugel 4 eines Kugelzapfens 5 eingesetzt ist. Die Kugel 4 ist mit einem Gleitgewebe 6 umgeben. Dieses Gleitgewebe 6 ist derart durchlässig gewählt, daß beim Einspritzen von Material für eine Lagerschale 7 durch eine Angußstelle 8 im Kugelgelenkgehäuse 2 das eingespritzte Material das Gleitgewebe 6 durchdringt und bis an die Kugel 4 heranreicht.

Hierdurch ist das Gleitgewebe 6 sehr fest in der Lagerschale 7 verankert, so daß es bei Belastung nicht verrutschen oder verschoben werden kann. Ebensowenig kann es bei Druckbelastung zusammengedrückt werden, da das Material der Lagerschale 7 bis an die Kugel 4 heranreicht und zusätzlich als Stütze und Gleitfläche wirkt.

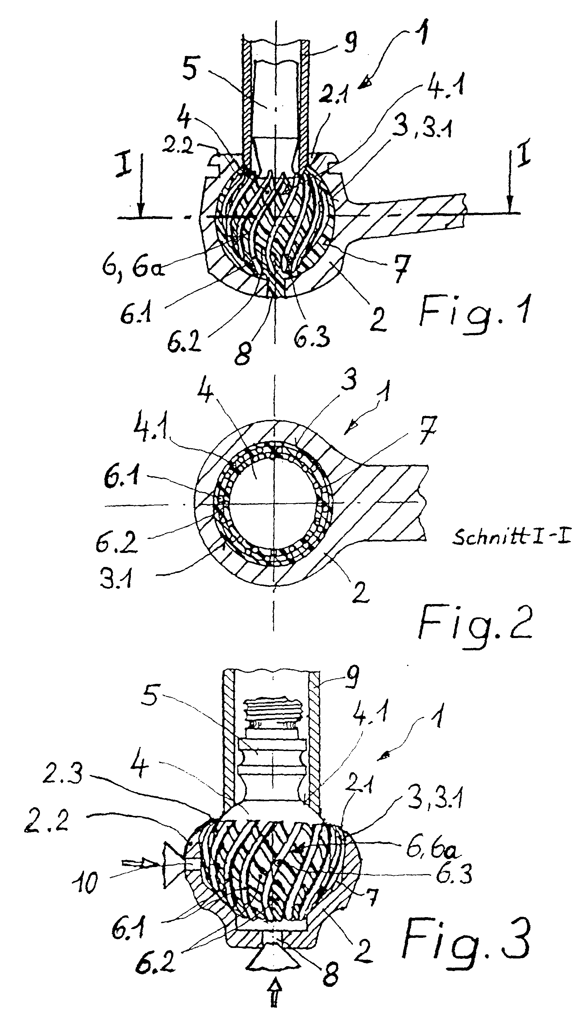

Bei den in der Zeichnung dargestellten Ausführungsbeispielen gemäß den Fig. 1 bis 3 ist das Gleitgewebe 6 als Netz 6a ausgebildet. Dieses Netz 6a ist derart gestaltet, daß in einer Richtung verlaufende Außenfäden 6.1 und in der sich kreuzenden Richtung verlaufende Innenfäden 6.2 in zwei benachbarten Ebenen angeordnet sind und die Fäden 6.1 und 6.2 an den Kreuzungsstellen 6.3 stoffschlüssig miteinander verbunden sind.

Das Netz 6a ist weiterhin so ausgebildet, daß es die Kugel 4 relativ fest umschließt. Dabei liegen bevorzugt die Innenfäden 6.2 zumindest teilweise, vorzugsweise jedoch ganz, unter Vorspannung an der Kugel 4 an. Die mit dem Netz 6a versehene Kugel 4 wird durch eine entsprechend große Öffnung 2.1 des Kugelgelenkgehäuses 2 in deren Aussparung 3 eingesetzt.

Beim Ausführungsbeispiel gemäß Fig. 1 und 2 übergreift der nach innen gebördelte obere Randbereich 2.2 des Kugelgelenkgehäuses 2 das Netz 6a und die Kugel 4 und liegt an einem Werkzeugteil 9 an.

Die Aussparung 3 ist so bemessen, daß zunächst das Gleitgewebe 6 bzw. Netz 6a und anschließend die Kugel 4 eingesetzt werden können.

Die Aussparung 3 ist so ausgebildet, daß die Außenfäden 6.1 an der Innenwand 3.1 der Aussparung 3 ganz oder teilweise anliegen, so daß die Kugel 4 in der richtigen Lage fixiert ist. Beim Einspritzen des Materials zur Bildung der Lagerschale 7 verteilt sich dieses über das Netz 6a und dringt bis zur Kugeloberfläche 4.1 vor. Dabei werden die Außenfäden 6.1, soweit sie nicht an der Innenwand 3.1 anliegen, vollkommen eingeformt. Die Innenfäden 6.2 werden ebenfalls umformt, jedoch bleibt der an der Kugeloberfläche 4.1 anliegende Bereich frei und dient so zur Gleitlagerung der Kugel 4.

Falls das Netz 6a die Innenwand 3.1 nicht berührt und ein Hohlraum zwischen beiden Teilen und dabei auch zwischen der Innenwand 3.1 und der Kugel 4 gebildet ist, wird der Kugelzapfen 5 mit Kugel 4 und Netz 6a von außen durch eine geeignete Vorrichtung lagefixiert. Die Lagefixierung kann beispielsweise durch ein zum Einspritzen des Lagerschalenmaterials notwendiges Formteilwerkzeug 9 erfolgen.

Beim Ausführungsbeispiel gemäß Fig. 3 ist die Öffnung 2.1 so groß, daß die Kugel 4 mit dem Netz 6a gemeinsam eingesetzt werden kann. Anschließend wird der obere Randbereich 2.2 nach innen gebördelt. Hierbei wird die Kugel 4 mit dem Netz 6a in der Aussparung 3 zentriert und lagerichtig, gegebenenfalls unter leichter Vorspannung, fixiert. Mit 6.3 sind wiederum die Kreuzungsstellen zwischen den Außen- und Innenfäden 6.1, 6.2 bezeichnet. Anschließend erfolgt die Herstellung der Lagerschale 7 in der bereits beschriebenen Weise. Das Einspritzen kann durch die untere Angußstelle 8 und/oder eine oder mehrere seitliche Angußstellen 10 erfolgen.

Die Randkante 2.3 wird soweit nach innen gebördelt, daß sie an der Lagerschale 7 anliegt.

Das Netz 6a bzw. das Gleitgewebe 6 und die Lagerschale 7 bestehen vorteilhaft aus einem linearen oder vernetzten Elastomer, insbesondere aus Polyurethan, Polyethylen, Polytetrafluorkohlenstoff, wie Polytetrafluorethylen, Polyamid, Polyimid oder aus einer Mischung von wenigstens zwei dieser Materialien.

Die für das Gleitgewebe 6 bzw. das Netz 6a vorgesehenen Materialien besitzen einen geringen Reibungskoeffizienten bevorzugt im Bereich von 0,05 bis 0,4.

## Patentansprüche

1. Kugelgelenk (1) bestehend aus einem Kugelgelenkgehäuse (2) mit in einer Aussparung (3) desselben vorgesehenen Lagerschale (7) aus Kunststoff, in der die Kugel (4) eines Kugelzapfens (5) gelagert ist, wobei die Lagerschale (7) aus einem an der Kugel (4) anliegenden Gewebe (6) mit sich kreuzenden Fäden besteht, das mit einem Lagermaterial aus Kunststoff hinterspritzt und von diesem durchdrungen ist, so daß durchgedrungenes Lagermaterial ebenfalls an der Kugel (4) anliegt, **dadurch gekennzeichnet, daß** das Gewebe (6)in Form eines Netzes (6a) ausgebildet ist, das aus in zwei Ebenen sich kreuzenden Außenfäden (6.1) und Innenfäden (6.2) besteht und die sich kreuzenden Außenfäden (6.1) und Innenfäden (6.2) an ihren Kreuzungsstellen (6.3) miteinander stoffschlüssig verbunden sind, wobei die Innenfäden (6.2) innen frei liegen und an der Kugel (4) anliegen.

2. Kugelgelenk nach Anspruch 1, **dadurch gekennzeichnet, daß** die Lagerschale (7) aus einem über wenigstens eine Angußstelle (8) im Kugelgelenkgehäuse (2) in die Aussparung (3) eingespritzten und das Netz (6a) umgebenden Kunststoff mit geringem Reibungskoeffizienten besteht.

3. Kugelgelenk nach Anspruch 1 oder 2, **dadurch gekennzeichnet, daß** das Netz (6a) aus einem linearen oder vernetzten Elastomer besteht.

4. Kugelgelenk nach einem der Ansprüche 1 bis 3, **dadurch gekennzeichnet, daß** das Netz (6a) aus einem Kunststoff aus oder auf der Basis von Polyurethan, Polyethylen, Polyfluorethylen, Polyamid, Polyimid oder einer Mischung aus wenigtens zwei dieser Materialien besteht.

5. Kugelgelenk nach einem der Ansprüche 1 bis 4, **dadurch gekennzeichnet, daß** die Lagerschale (7) aus einem linearen oder vernetzten Elastomer besteht.

6. Kugelgelenk nach einem der Ansprüche 1 bis 5, **dadurch gekennzeichnet, daß** die Lagerschale (7) aus Kunststoff aus oder auf der Basis von Polyurethan, Polyethylen, Polytetrafluorethylen, Polyamid, Polyimid oder einer Mischung aus wenigstens zwei dieser Materialien besteht.

7. Kugelgelenk nach einem der Ansprüche 1 bis 6, **dadurch gekennzeichnet, daß** die Öffnung (2.1) der Aussparung (3) des Kugelgelenkgehäuses (2) zunächst etwa die Größe der Kugel (4) mit aufgebrachtem Netz (6a) besitzt und der überstehende obere Randbereich (2.2) des Kugelgelenkgehäuses (2) nach innen gebördelt ist.

8. Kugelgelenk nach Anspruch 7, **dadurch gekennzeichnet, daß** der nach innen gebördelte obere Randbereich (2.2) an ein Werkzeugteil (9) anlegbar gestaltet ist.

9. Kugelgelenk nach Anspruch 7, **dadurch gekennzeichnet, daß** die Randkante (2.3) des oberen, nach innen gebördelten Randbereichs (2.2) an der Lagerschale (7) anliegt.

10. Kugelgelenk nach einem der Ansprüche 1 bis 9, **dadurch gekennzeichnet, daß** die Außenfäden (6.1) des Netzes (6a) an der Innenwand (3.1) der an die Kugel (4) mit dem Netz (6a) angepaßten Aussparung (3) des Kugelgelenkgehäuses (2) zumindest teilweise derart anliegen, daß sie die Kugel (4) lagerichtig zentrieren.

11. Kugelgelenk nach einem der Ansprüche 1 bis 10, **dadurch gekennzeichnet, daß** der Reibungskoefffizient des Netzes (6a) im Bereich von 0,05 bis 0,4 liegt.

## Claims

1. Ball joint (1) consisting of a ball joint housing (2) with a plastic bearing shell (7) which is provided in a recess (3) thereof and in which the ball (4) of a ball pin (5) is mounted, whereby the bearing shell (7) consists of a fabric (6) which has intersecting threads and bears on the ball (4) and is backed with an injected plastic bearing material and permeated by the latter so that permeated bearing material also bears on the ball (4), **characterised in that** the fabric (6) is embodied in the form of a network (6a) which consists of outer threads (6.1) and inner threads (6.2) intersecting in two planes and the intersecting outer threads (6.1) and inner threads (6.2) are connected together at their intersection points (6.3) in a material locking manner, whereby the inner threads (6.2) lie free on the inside and bear on the ball (4).

2. Ball joint according to claim 1, **characterised in that** the bearing shell (7) consists of a plastic with a low coefficient of friction which is injected into the recess (3) through at least one gate (8) in the ball joint housing (2) and surrounds the network (6a).

3. Ball joint according to claim 1 or 2, **characterised in that** the network (6a) consists of a linear or crosslinked elastomer.

4. Ball joint according to one of claims 1 to 3, **characterised in that** the network (6a) consists of a plastic made of or based on polyurethane, polyethylene, polyfluorethylene, polyamide, polyimide or a mixture of at least two of these materials.

5. Ball joint according to one of claims 1 to 4, **characterised in that** the bearing shell (7) consists of a linear or crosslinked elastomer.

6. Ball joint according to one of claims 1 to 5, **characterised in that** the bearing shell (7) consists of plastic made of or based on polyurethane, polyethylene, polytetrafluorethylene, polyamide, polyimide or a mixture of at least two of these materials.

7. Ball joint according to one of claims 1 to 6, **characterised in that** the opening (2.1) of the recess (3) of the ball joint housing (2) initially is roughly the size of the ball (4) with the network (6a) applied and the protruding upper edge area (2.2) of the ball joint housing (2) is bent over inwards.

8. Ball joint according to claim 7, **characterised in that** the upper edge area (2.2) bent over inwards is designed so that it can be applied to a tool part (9).

9. Ball joint according to claim 7, **characterised in that** the tip (2.3) of the upper edge area (2.2) bent over inwards bears on the bearing shell (7).

10. Ball joint according to one of claims 1 to 9, **characterised in that** the outer threads (6.1) of the network (6a) bear at least partly on the inner wall (3.1) of the recess (3) of the ball joint housing (2) matched to the ball (4) with the network (6a) such that they centre the ball (4) in the correct position.

11. Ball joint according to one of claims 1 to 10, **characterised in that** the coefficient of friction of the network (6a) lies in the range from 0.05 to 0.4.

## Revendications

1. Joint à rotule (1) dans lequel :
- un boîtier d'articulation (2) présente un évidement (3) contenant une coquille de palier (7) en matière plastique dans laquelle est logée la rotule (4) d'un pivot à rotule (5),
- la coquille de palier (7) est constituée d'un tissu (6) appliqué sur la rotule (4), composé de fils croisés imprégnés par injection d'une matière plastique constituant le matériau du palier, de sorte que le matériau injecté à travers le tissu est également appliqué sur la rotule (4),
**caractérisé en ce que**
le tissu (6) a la forme d'un réseau (6a) composé dans deux plans de fils externes (6.1) et de fils internes (6.2) se croisant, et à leurs points de croisement (6.3) ces fils externes (6.1) et internes (6.2) sont reliés entre eux par combinaison de matière, les fils internes (6.2) étant libres vers l'intérieur et appliqués sur la rotule (4).

2. Joint à rotule selon la revendication 1,
**caractérisé en ce que**
la coquille de palier (7) est composée d'une matière plastique à faible coefficient de frottement qui est injectée dans l'évidement (3) à travers au moins un point d'injection (8) du boîtier d'articulation (2) et qui enveloppe le réseau (6a).

3. Joint à rotule selon l'une quelconque des revendications 1 ou 2,
**caractérisé en ce que**
le réseau (6a) est composé d'un élastomère linéaire ou réticulé.

4. Joint à rotule selon l'une quelconque des revendications 1 à 3,
**caractérisé en ce que**
le réseau (6a) est en une matière plastique qui est constituée ou à base de polyuréthane, polyéthylène, polyfluoréthylène, polyamide, polyimide ou qui est un mélange d'au moins deux de ces matières.

5. Joint à rotule selon l'une quelconque des revendications 1 à 4,
**caractérisé en ce que**
la coquille de palier (7) est faite d'un élastomère linéaire ou réticulé.

6. Joint à rotule selon l'une quelconque des revendications 1 à 5,
**caractérisé en ce que**
la coquille de palier (7) est en une matière plastique qui est constituée ou à base de polyuréthane, polyéthylène, polyfluoréthylène, polyamide, polyimide ou qui est un mélange d'au moins deux de ces matières.

7. Joint à rotule selon l'une quelconque des revendications 1 à 6,
**caractérisé en ce que**
l'ouverture (2.1) de l'évidement (3) du boîtier d'articulation (2) a à peu près la dimension de la rotule (4) garnie du réseau (6a) et la zone marginale supérieure (2.2), en saillie vers le haut, de boîtier d'articulation (2) est rabattue vers l'intérieur.

8. Joint à rotule selon la revendication 7,
**caractérisé en ce que**
la zone marginale (2.2) supérieure, rabattue vers l'intérieur, est constituée de manière à pouvoir s'appliquer sur une partie d'outil (9).

9. Joint à rotule selon la revendication 7,
**caractérisé en ce que**
le bord (2.3) de la zone marginale supérieure, rabattue vers l'intérieur (2.2) est appliqué sur la coquille de palier (7).

10. Joint à rotule selon l'une quelconque des revendications 1 à 9,
**caractérisé en ce que**
les fils externes (6.1) du réseau (6a) sont appliqués sur la paroi interne (3.1) de l'évidement (3) du boîtier d'articulation (2), ajusté sur la rotule (4) par l'intermédiaire du réseau (6a) au moins en partie de sorte que ces fils assurent le centrage en position exacte de la rotule (4).

11. Joint à rotule selon l'une quelconque des revendications 1 à 10,
**caractérisé en ce que**
le coefficient de frottement du réseau (6a) se situe dans une plage allant de 0,05 à 0,4.
